(19) Europäisches Patentamt
European Patent Office
Office européen des brevets

(11) **EP 1 925 467 B1**

(12) **EUROPEAN PATENT SPECIFICATION**

(45) Date of publication and mention
of the grant of the patent:
**27.07.2011 Bulletin 2011/30**

(51) Int Cl.:
***B60C 9/00*** *(2006.01)*      ***B60C 9/08*** *(2006.01)*

(21) Application number: **06781775.9**

(22) Date of filing: **27.07.2006**

(86) International application number:
**PCT/JP2006/314864**

(87) International publication number:
**WO 2007/023640 (01.03.2007 Gazette 2007/09)**

(54) **PNEUMATIC TIRE**

LUFTREIFEN

PNEUMATIQUE

(84) Designated Contracting States:
**DE FR IT**

(30) Priority: **26.08.2005   JP 2005246545**

(43) Date of publication of application:
**28.05.2008   Bulletin 2008/22**

(73) Proprietor: **The Yokohama Rubber Co., Ltd.**
**Minato-ku**
**Tokyo 105-8685 (JP)**

(72) Inventor: **KANEHIRA, Yoshiki**
**Hiratsuka-shi**
**Kanagawa 254-8601 (JP)**

(74) Representative: **HOFFMANN EITLE**
**Patent- und Rechtsanwälte**
**Arabellastraße 4**
**81925 München (DE)**

(56) References cited:
EP-A- 1 867 495       WO-A1-2006/080253
JP-A- 11 334 313      JP-A- 2000 190 705
JP-A- 2001 295 134    JP-A- 2001 334 807
JP-A- 2002 307 908    JP-A- 2002 339 275
JP-A- 2003 013 326    JP-A- 2003 049 339
JP-A- 2004 306 631    JP-A- 2004 308 024
JP-A- 2004 308 027    JP-A- 2006 123 649
JP-A- 2006 183 167

**Description**

TECHNICAL FIELD

The present invention relates to a pneumatic tire. Specifically, the present invention relates to a pneumatic tire using a polyketone fiber for tire cords, and exhibiting, particularly as a pneumatic tire for a light truck, excellent characteristics, such as a reduced weight and a favorable driveability.

BACKGROUND ART

It has heretofore been proposed that a polyketone fiber be used in the fields of tire cords and the like (see, for example, Patent Documents 1 to 3). This is because the polyketone fiber is expected to have a high strength and a high elasticity, and to be also excellent in fatigue resistance, processability, heat resistance, dimensional stability, and further, adhesiveness and the like.

With the above-described distinctive characteristics of the polyketone fiber, the polyketone fiber has been expected to make it possible to achieve a pneumatic tire with an improved driveability and a reduced weight as well as a traveling durability that is equivalent to, or better than, that of a conventional pneumatic tire of the same type. However, the previous proposals do not necessarily utilize the excellent characteristics of the polyketone fiber to the full extent. Particularly, from the viewpoint of achieving favorable load durability and high-speed durability of a tire, the full performance of the polyketone fiber has not been actually achieved yet.

For example, Patent Document 1 proposes a heavy-duty pneumatic tire with the following configuration. In this heavy-duty pneumatic tire, a carcass ply formed of a polyketone fiber and a coating rubber having predetermined properties is used to reduce the difference in rigidity between the cords and the rubber. This configuration makes it possible to achieve a weight reduction while maintaining a traveling durability equivalent to that of existing pneumatic tires. However, it is necessary to use the coating rubber with the predetermined properties, and there is also a limitation in application. Accordingly, this proposal has not been actually employed for such a pneumatic tire for a light truck as described above.

On the other hand, Patent Document 2 proposes a heavy-duty pneumatic tire with the following configuration. In this heavy-duty pneumatic tire, an organic fiber cord of polyester, aramid, rayon, or polyketone, of 5500 dtex to 17000 dtex, is used for a carcass of the tire. In addition, each folded-back portion of the carcass ply is further folded back along the outer side surface, in the radial direction, of the corresponding bead core. However, this proposal does not necessarily utilize particularly the distinctive characteristics of the polyketone fiber. In addition, this proposal is not of a pneumatic tire for a light truck but of a heavy-duty pneumatic tire. Accordingly, no pneumatic tire for a light truck has been manufactured yet.

Moreover, Patent Document 3 proposes a heavy-duty pneumatic radial tire with the following configuration. In this heavy-duty pneumatic tire, a carcass is formed of an organic fiber cord of 5500 to 17000 dtex that exhibits a rate of elongation of 5.0% or less under a tension of 19.8 mN/dtex when being taken out from the tire. Moreover, polyester, rayon, or polyketone, is used for the organic fiber cord to form the heavy-duty pneumatic radial tire. However, this proposal also does not necessarily utilize particularly the distinctive characteristics of the polyketone fiber. In addition, this proposal is not of a pneumatic tire for a light truck but of a heavy-duty pneumatic tire. Accordingly, no pneumatic tire for a light truck has been manufactured yet.

As described above, it can hardly be said that any of these inventions described in Patent Documents 1 to 3 proposes an excellent pneumatic tire by taking advantage particularly of the distinctive characteristics of the polyketone fiber to the fullest extent.

In particular, the polyketone fiber has a high strength and a high elasticity. In view of the manufacturing processes of tires, the polyketone fiber exhibits a higher thermal shrinkage stress, which is generated during a curing process, than that of a polyethylene terephthalate (PET) fiber. Accordingly, in a post cure inflation (PCI) process, where a tire is inflated to a predetermined air pressure immediately after the tire is cured and then removed from a mold, only a small dimensional change occurs. For this reason, the polyketone fiber is expected to be used for, not only improving the durability and driveability of a tire, but also reducing the total weight of the tire by reducing the number of plies in the carcass, or by reducing the size (decitex) of a fiber cord to be used.

However, for the purpose of utilizing, in the manufacturing of tires, such effects of the polyketone fiber as expected, it is effective to make the thermal shrinkage characteristics of the polyketone fiber most suitable for the manufacturing processes of each tire, and to also narrow down the types of tires in which the polyketone fiber is to be employed.

Patent Document 1: Japanese Patent Application Kokai Publication No. 2004-306631 (Claim 1)
Patent Document 2: Japanese Patent Application Kokai Publication No. 2000-142039 (Claim 3)
Patent Document 3: Japanese Patent Application Kokai Publication No. 2000-142019 (Claim 2)

Attention is also drawn to the document JP-A-2002 307908.

DISCLOSURE OF INVENTION

Problems to be solved by the Invention

The present invention has been made in view of the above-described circumstances. An object of the present invention is to provide, by using polyketone fibers having a high strength and a high elasticity characteristics, a pneumatic tire with a reduced weight and an improved driveability, as well as a traveling durability that is equivalent to, or better than, that of a conventional pneumatic tire using PET.

In particular, an object of the present invention is to provide a pneumatic tire with a high air pressure at the time of post cure inflation (PCI) process, which is best suited as a pneumatic tire for a light truck, with a high air pressure.

Means for Solving the Problem

A pneumatic tire of the present invention for achieving the above-described object includes the following configuration (1).

(1) The pneumatic tire includes at least one carcass layer and a belt layer on the outer periphery of the carcass layer. In the pneumatic tire, twisted cords formed of a polyketone fiber represented by the following formula (a), and having a thermal shrinkage stress value, at a dry heat temperature of 150°C, in a range from 0.41 cN/dtex to 0.69 cN/dtex are used as cords for forming the carcass layer.

$$-(CH_2-CH_2-CO)n-(R-CO-)m- \qquad \text{formula (a)}$$

In the formula (a), the relationship between n and m is represented by the following formula (b), and R represents an alkylene group having 3 or more carbon atoms.

$$1.05 \geq (n+m)/n \geq 1.00 \ldots \text{formula (b)}$$

In addition, the pneumatic tire according to the present invention preferably includes, to be specific, any one of the following configurations (2) to (4).

(2) The pneumatic tire described in (1) is characterized in that the twisted cords, formed of the polyketone fiber, and used for the carcass layer, are obtained by doubling and twisting at least one polyketone filament yarn of 1100 dtex to 2200 dtex.

(3) The pneumatic tire described in any one of (1) and (2) is characterized in that the air pressure of the tire is in a range from 350 kPa to 650 kPa.

(4) The pneumatic tire described in any one of (1), (2), and (3) is characterized by being a pneumatic tire for a light truck.

Effect of the Invention

According to the pneumatic tire described in claim 1 of the present invention, it is possible to achieve a pneumatic tire with an improved driveability and a reduced weight while maintaining a traveling durability which is equivalent to, or better than, that of a conventional pneumatic tire using a PET fiber for a carcass fiber cord. In particular, it is possible to achieve a pneumatic tire which is excellent to be used as a pneumatic tire for a light truck with a higher air pressure, for example, in a range from 350 kPa to 650 kPa.

According to the pneumatic tire described in any one of claims 2 to 4 of the present invention, it is possible to achieve a pneumatic tire which is excellent to be used as a pneumatic tire for a light truck.

BRIEF DESCRIPTION OF DRAWINGS

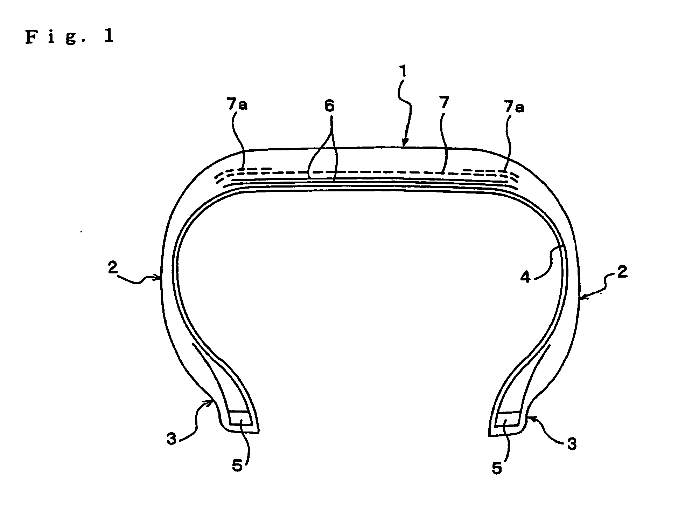

[Fig. 1] Fig. 1 is a schematic cross-sectional view taken along the meridional direction of a pneumatic tire, for explaining an example of an embodiment of the pneumatic tire of the present invention.

EXPLANATION FOR REFERENCE NUMERALS

1: Tread Portion
2: Sidewall Portion
3: Bead Portion
4: Carcass Layer
5: Bead Core
6: Belt Layer
7: Belt-cover Layer Covering Entire Width of Belt Layer 6
7a: Belt-cover Layers Covering Only Both End Portions of Belt Layer 6

BEST MODES FOR CARRYING OUT THE INVENTION

Hereinafter, a pneumatic tire of the present invention will be described in more detail.
The pneumatic tire of the present invention includes at least one carcass layer and belt layers disposed on the outer periphery of the carcass layer. The pneumatic tire is characterized in that twisted cords formed of a polyketone fiber represented by the following formula (a) and having a thermal shrinkage stress value, at a dry heat temperature of 150°C, in a range from 0.41 cN/dtex to 0.69 cN/dtex are used as cords for forming the carcass layer.

$$-(CH_2-CH_2-CO)n-(R-CO-)m-  \qquad \text{formula (a)}$$

In the formula (a), the relationship between n and m is represented by the following formula (b), and R represents an alkylene group having 3 or more carbon atoms.

$$1.05 \geq (n+m)/n \geq 1.00 \ ... \ \text{formula (b)}$$

The polyketone fiber used in the present invention may be obtained by a melt spinning method or a wet spinning method, which are disclosed in, for example, Japanese Patent Application Kokai Publication No. Hei 1-124617, Japanese Patent Application Kokai Publication No. Hei 2-112413, US Patent No. 5194210, Japanese Patent Application Kokai Publication No. Hei 9-324377, Japanese Patent Application Kokai Publication No. 2001-115007, and Japanese Patent Application Kokai Publication No. 2001-131825. What is important is to use the polyketone fiber having the structure represented by the above formula (a).
It is not preferable that the ratio of m (the ratio of alkylene units other than ethylene units) in the polyketone fiber increase. When the ratio of m increases, the tire growth becomes larger, resulting in a reduction in durability. This is because the crystal structure of the spun fiber is changed due to the increase in m units, so that the secondary bonding strength among the molecular chains is decreased. Moreover, as the strength of the fiber is decreased, the strength of the.twisted cord made of the fiber is further decreased. Accordingly, it is necessary to increase the amount of cords to be used for securing the breaking strength of the tire. As a result, it is difficult to provide a cost-efficient tire with a reduced weight.
Here, it is more preferable to use an alternating copolymer, with m=0, that is formed substantially of only ethylene and carbon monoxide. For fabricating such a fiber, the wet spinning method is preferably used.
The present invention focuses on the following effect of using, for a carcass cord, a polyketone fiber generally having a high strength and a high elasticity, and particularly having the above-described characteristics of thermal shrinkage stress. The polyketone fiber exhibits a higher thermal shrinkage stress, generated during a tire curing process, than, for example, the conventionally-used polyethylene terephthalate (PET) fiber (in general, the PET exhibits a thermal shrinkage stress of 0.07 cN/dtex to 0.18 cN/dtex). Accordingly, in a post cure inflation (PCI) process, where a tire is inflated to a predetermined air pressure, which is performed immediately after the tire is cured and is then removed from a mold, a dimensional change can be reduced more than the conventional case.

This results in the following effect. In particular, suppose the case of manufacturing a tire for a light truck to which a higher air pressure is applied in the PCI process, that is, a tire with a higher air pressure. In this case, for example, when the conventional PET fiber is used for a carcass, it has been necessary to use a lamination of three plies for the carcass. In contrast, by using a carcass using the polyketone fiber of the present invention, the following effects can be achieved. For example, it is necessary to use a lamination of only two plies. Alternatively, even in a case of using a lamination of three plies, a thinner polyketone fiber can be used, or the total amount of polyketone fibers can be reduced. Furthermore, this makes it possible to provide a pneumatic tire with a reduced weight, as well as a driveability which is equivalent to, or more improved than, a conventional pneumatic tire.

It is important that the polyketone fiber used in the present invention has a thermal shrinkage stress value, at a dry heat temperature of 150°C, in a range from 0.41 cN/dtex to 0.69 cN/dtex.

The reason why the thermal shrinkage stress value at the dry heat temperature of 150°C is used as a reference parameter is as follows. Immediately after a tire is removed from a mold after curing, a post cure inflation (PCI) process is performed where a pneumatic tire is inflated to a predetermined air pressure. In this process, since the tire is gradually cooled down from a temperature of 150°C or more, the tire dimensions are changed due to a value of thermal shrinkage stress, which is generated in the process. Accordingly, it is meaningful to use the thermal shrinkage stress value at the dry heat temperature of 150°C as a reference because the thermal shrinkage stress value influences the level of the dimensional change.

In the present invention, since the thermal shrinkage stress value at the dry heat temperature of 150 °C is in a range from 0.41 cN/dtex to 0.69 cN/dtex, the deformation of the tire due to a tensile force generated in its carcass cord in the post cure inflation (PCI) process can be suppressed. When the thermal shrinkage stress value at the dry heat temperature of 150°C is less than 0.41 cN/dtex, the thermal shrinkage stress value is insufficient. Accordingly, the tire is deformed due to the tensile force generated therein in the post cure inflation (PCI) process. As a result, it is difficult to obtain a pneumatic tire having predetermined dimensions maintained.

Fig. 1 is a schematic cross-sectional view taken along the meridional direction of a pneumatic tire, for explaining an example of an embodiment of the pneumatic tire of the present invention. Reference numerals 1 2, and 3 denote a tread portion, a sidewall portion, and a bead portion, respectively. A carcass layer 4 is buried inside the pneumatic tire to extend entirely over the tread portion 1, the left and right sidewall portions 2, and the bead portions 3. The carcass layer 4 is formed of organic fiber cords oriented substantially at 90 degrees with respect to the tire circumferential direction. Each of the two end portions of the carcass layer 4 is folded back around a bead core 5 from the inner side of the tire to the outer side thereof. On the outer periphery of the carcass layer 4, two belt layers 6 each formed of steel cords are provided. Moreover, on the outer periphery of the belt layers 6, a belt cover layer 7 and belt cover layers 7a are provided. The belt cover layer 7 covers the entire width of the belt layers 6 while each of the belt cover layers 7a covers a corresponding one of the two end portions of the belt layers 6.

In the pneumatic tire of the present invention, it is preferable that twisted cord formed of the polyketone fiber be formed in the following manner. Specifically, the twisted cord is preferably formed by twisting a single polyketone multifilament yarn, of the polyketone fibers, and of 1100 dtex to 2200 dtex. Alternatively, the twisted cord may be formed by doubling and twisting a plurality of the polyketone multifilament yarns.

The size of a filament forming the polyketone multifilament yarn (the single fiber fineness of the polyketone multifilament yarn) is not particularly limited. However, according to the knowledge of the inventor, the single fiber fineness ranges preferably from 0.5 dtex to 7 dtex, and more preferably from 1 dtex to 4.5 dtex.

When the single fiber fineness is less than 0.5 dtex, many fuzzes are sometimes formed in a stage where the fibers are still a material, such as, in a fiber-forming process, a twisting process, and a weaving process. As a result, since the strength of cords is decreased, such single fiber fineness is not preferable. On the other hand, in general, it is also not preferable that the single fiber fineness be more than 7 dtex because of the following reason. While the polyketone fiber is fabricated generally by the wet spinning method, the skin-core structure on the surface of a fiber is made outstanding in the case where the single fiber fineness is more than 7 dtex. As a result, the fiber is caused to have a structure in which fibrillation is likely to occur to decrease the strength of cords.

The polyketone fiber having a thermal shrinkage stress value, at the dry heat temperature of 150°C, in a range from 0.41 cN/dtex to 0.69 cN/dtex may be manufactured by performing after forming a polyketone fiber appropriate thermal processing on a yarn of the polyketone fiber. In the present invention in particular, the thermal processing may be included in a tire manufacturing process (a carcass manufacturing process). To be specific, for example, the polyketone fiber is particularly preferably obtained in the following manner of performing the thermal processing, although the method is not particularly limited to this example.

In the forming of a twisted cord of a polyketone fiber in a carcass layer, generally provided is a process where an RFL (resorcin-formalin-latex) solution is applied in advance as an adhesive agent to improve the adhesion between the twisted cord and rubber which is another constituent material of the carcass. Firstly, a twisted cord of the polyketone fiber is immersed in the RFL solution, so that the RFL solution is attached to the twisted cord. Then, a heat stretching process is performed for drying and fixing the RFL solution under particular conditions. As a result, the polyketone fiber having a thermal shrinkage stress value, at the dry heat temperature of 150°C, in a range from 0.41 cN/dtex to 0.69 cN/dtex can be obtained.

To be specific, the heat stretching process is performed while being divided into two zones: a heat set zone; and a normalizing zone. In particular, it is important that the processes respectively of the heat set zone and the normalizing zone be performed under the following conditions. Specifically, the process of the heat set zone is performed under conditions: at a temperature ranging from 190°C to 260°C; for a time ranging from 60 sec to 180 sec; and with a tension, applied to the cords, ranging from 0.20 cN/dtex to 1.50 cN/dtex. On the other hand, the process of the normalizing zone is performed under conditions: at a temperature ranging from 190°C to 260°C, for a time ranging from 60 sec to 180 sec, and with a tension, applied to the cords, not less than 0.015 cN/dtex.

What is vital in these conditions for the heat stretching process is that the tension for the process of the heat set zone in the above-described range, in particular, be set higher than that for the process of the normalizing zone.

Note that, the attached amount of the resorcin, formalin, and latex (the attached amount of its active solid component) is preferably not more than 7 weight percent (with respect to the weight of the carcass layer), and is more preferably not less than 3.0 weight percent and not more than 6.0 weight percent.

The pneumatic tire of the present invention is particularly effective when being used as a pneumatic tire for a light truck, to which a higher air pressure is applied in a PCI process, that is, a tire with a higher air pressure. Regarding not a type of vehicle but an air pressure used for a tire, the present invention is more effective when being used as a pneumatic tire with an air pressure in a range from 350 kPa to 650 kPa.

EXAMPLES

Hereinafter, the specific configuration and effects of the pneumatic tire of the present invention will be described with reference to examples.

It should be noted that parameters used in the descriptions of the present invention are measured or determined by methods described below.

(1) Thermal Shrinkage Stress Value at Dry Heat Temperature of 150°C:

A fiber cord was set to chucks having a gap of 250 mm. A sample length (between the chucks) in a state where a load of (a displayed decitex number $\times$ 0.45) mN was applied was taken as a test length. While the test length was maintained, the temperature was increased in accordance with the following temperature-increase pattern. Then, a thermal shrinkage stress generated at a temperature of 150°C was measured. The measurement was performed by assigning 2 to the number n, and then the average value of the measured values was taken. Temperature-Increase Pattern

- The temperature is increased from room temperature to 40°C for one minute, and is maintained at this level for one minute.
- Thereafter, the temperature is increased to 250°C at an increase rate of 5°C/min, and is then maintained in this state for 10 minutes. After that, the fiber cord is cooled down.

(2) Carcass Strength Index:

The total strength is obtained from (the total number of used carcasses $\times$ the strength of carcass), and is indicated by an index where the total strength of Comparative Example 2 is taken as a reference (100). The larger the index is, the more excellent the strength is.

(3) Driveability:

Tires prepared respectively in Examples and Comparative Examples were used. Each tire was mounted on a 4t truck with an air pressure set at 650 kPa. Then, a lap time was measured by driving the 4t truck on slalom, and the measured time was shown by an index. The index is indicated while the lap time of Comparative Example 2 was taken as a reference (100). The smaller the index is, the more excellent the driveability is.

(4) Tire Weight:

The weight of each of the tires prepared respectively by Examples and Comparative Examples was measured, and was indicated by an index where the weight of the tire of Comparative Example 2 was taken as a reference (100). The smaller the index is, the more excellent the tire weight is.

Examples 1 to 9, and Comparative Examples 1 and 2

Prepared were 11 types of pneumatic tires for a light truck in total. Each tire had a tire size of 750R15 12PR. A carcass layer of each of these tires was formed of, one of various types of polyketone fibers (indicated by "POK" in Tables 1 and 2) having different thermal shrinkage stresses at the dry heat temperature of 150°C, or a polyethylene terephthalate fiber (indicated by "PET" in Table 2) . The number of plies (2 or 3 layers) and the number of ends (the number of cord ends arranged in each 50 mm of the width of the carcass) of each carcass layer are varied.

In the pneumatic tires of Examples 1 to 3 and Comparative Examples 1 to 3, a carcass cord was formed of a two-folded yarn obtained by doubling and twisting two multifilament yarns each with a yarn size of 1670 dtex (T) (the "dtex" is indicated by "T" in Tables 1 and 2).

In the pneumatic tires of Examples 4 and 5, a carcass cord was formed of a two-folded yarn obtained by doubling and twisting two multifilament yarns each with a yarn size of 1100 dtex (T).

In the pneumatic tire of Example 6, a carcass cord was formed of a two-folded yarn obtained by doubling and twisting two multifilament yarns each with a yarn size of 2200 dtex (T).

In the pneumatic tire of Example 7, a carcass cord was formed of a three-folded yarn obtained by doubling and twisting three multifilament yarns each with a yarn size of 550 dtex (T).

In the pneumatic tire of Example 8, a carcass cord was formed of a two-folded yarn obtained by doubling and twisting two multifilament yarns each with a yarn size of 2750 dtex (T).

In addition, each of the pneumatic tires of Examples 1 to 8 and Comparative Examples 1 and 3 had the carcass cord using the polyketone fiber. Only the pneumatic tire of Comparative Example 2 had the carcass cord using the PET fiber yarn, and is generally used as a pneumatic tire according to the conventional technique for a light truck.

The polyketone fibers used respectively in Examples 1 to 8 and Comparative Examples 1 and 3 were each obtained in accordance with the chemical formula represented by the formula (a) in this description. On the other hand, the value of $\{(n+m)/n\}$ in the formula (b) is 1.01 for each of Examples.

The heat stretching process was performed on each of the fibers of Examples and Comparative Example after the process in which the RFL (resorcin-formalin-latex) solution was attached to the fiber cord by immersing the cord in the solution. The heat stretching process was performed on these cords also under various conditions for making the thermal shrinkage stresses of the cords at the dry heat temperature of 150°C different from one another. The conditions of the heat stretching process for the respective cords are shown in Table 3 with respect to the heat set zone and the normalizing zone. Among them, the polyketone fibers of Examples 1 to 8 except Comparative Examples 1 and 3 exhibited thermal shrinkage stress values at the dry heat temperature of 150°C each in a range from 0.41 cN/dtex to 0.62 cN/dtex, as shown in the rightmost field of Table 3.

In each of Examples and Comparative Examples, the amount of resorcin-formalin-latex to be attached was approximately 5 weight percent (with respect to the weight of the carcass cord).

The results of evaluating these 11 types of pneumatic tires for a light truck thus obtained are shown in Tables 1 and 2.

As is clear from Examples and Comparative Examples, according to the pneumatic tire of the present invention, it is possible to achieve, by using a polyketone fiber having a high strength and a high elasticity as its distinctive characteristics, a pneumatic tire with an improved driveability and a reduced weight as well as a traveling durability which is equivalent to, or better than that of a conventional pneumatic tire using PET.

[Table 1]

| Items | Example 1 | Example 2 | Comparative Example 3 | Example 3 | Comparative Example 1 | Comparative Example 2 |
|---|---|---|---|---|---|---|
| Type of Fiber | POK | POK | POK | POK | POK | PET |
| Carcass Cord | 1670T/2 | 1670T/2 | 1670T/2 | 1670T/2 | 1670T/2 | 1670T/2 |
| Number of Carcass Plies (Layers) | 2 | 2 | 2 | 2 | | 3 |
| Number of Cord Ends (per 50 mm) | 55 | 55 | 55 | 55 | 55 | 50 |
| Thermal Shrinkage Stress Value at Dry Heat Temperature (cN/dtex) | 0.57 | 0.41 | 0.21 | 0.62 | 0.18 | 0.14 |
| Carcass Strength Index | 100 | 100 | 100 | 106 | 100 | 100 |
| Driveability | 96 | 97 | 97 | 95 | 99 | 100 |
| Tire Weight | 95 | 95 | 95 | 95 | 95 | 100 |

[Table 2]

| Items | Example 4 | Example 5 | Example 6 | Example 7 | Example 8 |
|---|---|---|---|---|---|
| Type of Fiber | POK | POK | POK | POK | POK |
| Carcass Cord | 1100T/2 | 1100T/2 | 2200T/2 | 550T/3 | 2750T/2 |
| Number of Carcass Plies (Layers) | 3 | 3 | 2 | 3 | 2 |
| Number of Cord Ends (per 50 mm) | 60 | 60 | 50 | 75 | 45 |
| Thermal Shrinkage Stress Value at Dry Heat Temperature (cN/dtex) | 0.57 | 0.41 | 0.57 | 0.62 | 0.57 |
| Carcass Strength Index | 103 | 108 | 125 | 100 | 125 |
| Driveability | 96 | 95 | 94 | 93 | 97 |
| Tire Weight | 96 | 96 | 97 | 99 | 99 |

[Table 3]

| | Conditions for Heat Set Zone Process | Conditions for Normalization Zone Process | Thermal Shrinkage Stress Value at Dry Heat Temperature of 150°C (cN/dtex) |
|---|---|---|---|
| Example 1 | 0.38 cN/dtex × 220°C × 60 seconds | 0.19 cN/dtex × 220°C × 60 seconds | 0.57 |
| Example 2 | 0.29 cN/dtex × 220°C × 120 seconds | 0.06 cN/dtex × 220°C × 120 seconds | 0.41 |

(continued)

|  | Conditions for Heat Set Zone Process | Conditions for Normalization Zone Process | Thermal Shrinkage Stress Value at Dry Heat Temperature of 150°C (cN/dtex) |
|---|---|---|---|
| Comparative Example 3 | 0.20 cN/dtex × 240°C × 180 seconds | 0.016 cN/dtex × 240°C × 180 seconds | 0.21 |
| Example 3 | 0.53 cN/dtex × 220°C × 60 seconds | 0.26 cN/dtex × 220°C × 60 seconds | 0.62 |
| Example 4 | 0.53 cN/dtex × 200°C × 60 seconds | 0.19 cN/dtex × 200°C × 60 seconds | 0.57 |
| Example 5 | 0.35 cN/dtex × 220°C × 120 seconds | 0.06 cN/dtex × 220°C × 120 seconds | 0.41 |
| Example 6 | 0.53 cN/dtex × 240°C × 60 seconds | 0.19 cN/dtex × 240°C × 60 seconds | 0.57 |
| Example 7 | 1.50 cN/dtex × 220°C × 60 seconds | 0.26 cN/dtex × 220°C × 60 seconds | 0.62 |
| Example 8 | 0.38 cN/dtex × 200°C × 60 seconds | 0.19 cN/dtex × 200°C × 60 seconds | 0.57 |
| Comparative Example 1 | 0.14 cN/dtex × 250°C × 180 seconds | 0.014 cN/dtex × 250°C × 180 seconds | 0.18 |
| Comparative Example 2 | 0.82 cN/dtex × 235°C × 60 seconds | 0.41 cN/dtex × 235°C × 60 seconds | 0.14 |

**Claims**

1. A pneumatic tire comprising:

   at least one carcass layer (4); and
   a belt layer (6) disposed on the outer periphery of the carcass layer (4), **characterised in that**
   twisted cords formed of polyketone fibers represented by the following formula (a), and having a thermal shrinkage stress value at a dry heat temperature of 150° C in a range from 0.41 cN/dtex to 0.69 cN/dtex are used as cords for forming the carcass layer (4) :

   $$-(CH_2-CH_2-CO)\ n-(R-CO-)\ m-\qquad \text{formula (a)};$$

   where the relationship between n and m is represented by the following formula (b), and R represents an alkylene group having 3 or more carbon atoms:

   $$1.05 \geq (n+m)/n \geq 1.00 \qquad \text{formula (b)}.$$

2. The pneumatic tire according to claim 1, wherein
   the twisted cords, which are formed of the polyketone fibers to be used for the carcass layer, are obtained by doubling and twisting at least one polyketone filament yarn of 1100 dtex to 2200 dtex.

3. The pneumatic tire according to any one of claims 1 and 2, wherein the pneumatic tire is adapted to be used with an air pressure in a range from 350 kPa to 650 kPa.

4. The pneumatic tire according to any one of claims 1 to 3 that is a pneumatic tire for a light truck.

**Patentansprüche**

1. Luftreifen umfassend:

   mindestens eine Karkassenschicht (4); und
   eine Gürtelschicht (6), welche am äußeren Rand der Karkassenschicht (4) angeordnet ist, **dadurch gekennzeichnet, dass**
   verzwirnte Kords, die aus Polyketonfasern der folgenden Formel (a) gebildet sind und einen Wärmeschrumpfungs-Spannungswert im Bereich von 0,41 cN/dtex bis 0,6 cN/dtex bei einer Trockenheiztemperatur von 150°C aufweisen, als Kords für die Bildung der Karkassenschicht (4) verwendet werden:

   $$-(CH_2\text{-}CH_2\text{-}CO)n\text{-}(R\text{-}CO\text{-})m-\qquad \text{Formel (a)};$$

   worin die Beziehung zwischen n und m durch die folgende Formel (b) dargestellt ist, und R eine Alkylengruppe mit 3 oder mehr Kohlenstoffatomen darstellt:

   $$1,05 \geq (n+m)/n \geq 1,00 \qquad \text{Formel (b).}$$

2. Luftreifen gemäß Anspruch 1, worin die verzwirnten Kords, die aus Polyketonfasern gebildet sind und für die Karkassenschicht verwendet werden, durch Verdopplung und Verzwirnen mindestens eines Polyketon-Filamentgarns mit 1.100 dtex bis 2.200 dtex erhalten werden.

3. Luftreifen gemäß einem der Ansprüche 1 und 2, worin der Luftreifen angepasst ist, um mit einem Luftdruck im Bereich von 350 kPa bis 650 kPa verwendet zu werden.

4. Luftreifen gemäß einem der Ansprüche 1 bis 3, welcher ein Luftreifen für einen leichten Lastkraftwagen ist.

**Revendications**

1. Bandage pneumatique comprenant:

   au moins une couche de carcasse (4); et
   une couche de ceinture (6) disposée sur la périphérie extérieure de la couche de carcasse (4), **caractérisé en ce que** des cordes tordues réalisées en fibres de polykétone représentées par la formule suivante (a) et ayant une valeur de tension par retrait thermique à une température de chaleur sèche de 150°C dans une plage de 0,41 cN/dtex à 0,69 cN/dtex sont utilisées comme cordes pour former la couche de carcasse (4) :

   $$-(CH_2\text{-}CH_2\text{-}CO)n\text{-}(R\text{-}CO\text{-})m-\qquad \text{formule (a) ;}$$

   où la relation entre n et m est représentée par la formule suivante (b), et R représente un groupe alkylène ayant 3 atomes de carbone ou plus :

   $$1,05 \geq (n+m)/n \geq 1,00 \qquad \text{formule (b).}$$

2. Bandage pneumatique selon la revendication 1, dans lequel les cordes tordues, qui sont formées en fibres de polykétone à utiliser pour la couche de carcasse, sont obtenues en doublant et en tordant au moins un fil de filament en polykétone de 1100 dtex à 2200 dtex.

3. Bandage pneumatique selon l'une quelconque des revendications 1 et 2, dans lequel le bandage pneumatique est apte à être utilisé avec une pression d'air dans une plage de 350 kPa à 650 kPa.

**4.** Bandage pneumatique selon l'une quelconque des revendications 1 à 3, qui est un bandage pneumatique pour un camion léger.

Fig. 1

**EP 1 925 467 B1**

**REFERENCES CITED IN THE DESCRIPTION**

**Patent documents cited in the description**

- JP 2004306631 A
- JP 2000142039 A
- JP 2000142019 A
- JP 2002307908 A
- JP HEI1124617 B
- JP HEI2112413 B
- US 5194210 A
- JP HEI9324377 B
- JP 2001115007 A
- JP 2001131825 A